# FASCICULE DE BREVET EUROPEEN

(11) **EP 1 659 099 B1**
(45) Date de publication et mention de la délivrance du brevet: **11.02.2009**
(21) Numéro de dépôt: 05110942.9
(22) Date de dépôt: 18.11.2005
(51) Int. Cl.: C02F 3/32

(54) **Elément de dallage destiné à être disposé en partie inférieure d'une installation de traitement d'effluents**
Plattenbelagelement zur Verwendung im unteren Bereich einer Anlage zur Abwasserbehandlung
Slab element destined for use in the lower base of a wastewater treatment installation

(30) Priorité: 18.11.2004 FR 0412244
(43) Date de publication de la demande: 24.05.2006
(73) Titulaire: Mongin, Pierre, 37390 Cerelles (FR); Mongin, Jacqueline, 37390 Cerelles (FR); Mongin, Stéphane, 33500 Libourne (FR)
(72) Inventeur: Mongin, Pierre, 37390 Cerelles (FR); Mongin, Jacqueline, 37390 Cerelles (FR); Mongin, Stéphane, 33500 Libourne (FR); Würster, Wolfgang, 74670 Forchtenberg (DE)
(74) Mandataire: Callon de Lamarck, Jean-Robert

(56) Documents cités:
- AU-A- 2 449 877
- DE-A1- 4 241 278
- DE-C1- 4 403 454
- DE-C1- 10 143 985
- US-A- 2 874 844
- LOFFLER H ET AL: "PHYTOFILT - VORSTELLUNG EINER LEISTUNGSFAHIGEN PFLANZENKLARANLAGE FUER KLEINE GEMEINDEN" KORRESPONDENZ ABWASSER, ABWASSERTECHNISCHE VEREINIGUNG, ST. AUGUSTIN, DE, vol. 38, no. 3, 1 mars 1991 (1991-03-01), pages 376-378,380,38, XP000175819 ISSN: 0341-1540

## Description

L'invention concerne le domaine des installations de traitement des eaux usées ou effluents.

L'invention se rapporte en particulier aux dispositifs de traitement de petites tailles, destinés au traitement des effluents pour des collectivités comprenant une population formée d'environ 500 à 3000 habitants.

Le document FR 2 799 457 (publié le 13 avril 2001) décrit un dispositif d'épuration des effluents urbains comprenant notamment un bassin étanche dans lequel sont disposées des couches de granulats. Le dispositif comprend des moyens d'aspersion destinés à répandre l'effluent à traiter sur la surface supérieure du bassin de sorte que l'effluent percole verticalement à travers les couches de granulats. Le dispositif comprend également des blocs parallélépipédiques alvéolés disposés en partie inférieure du bassin, sous les couches de granulats. Ces blocs parallélépipédiques ont pour fonction de recueillir l'effluent et de permettre une circulation d'air en partie basse du dispositif de manière à aérer les granulats.

L'aération des granulats assure un fonctionnement aérobie de l'installation. Cette caractéristique a pour avantages de limiter la génération d'odeurs et de limiter la surface d'occupation globale de l'installation.

On connaît du document FR 2 603 882 (publié le 18 mars 1988) des blocs parallélépipédiques destinés à être utilisés dans des dispositifs de traitement des eaux usées ou de gaz effluents. Chaque bloc parallélépipédique ou pavé comprend un canal interne et est pourvu sur l'une de ses faces d'encoches communiquant avec le canal. Le document indique que ces pavés peuvent être obtenus par moulage.

Ces blocs parallélépipédiques ou pavés présentent l'inconvénient d'être particulièrement volumineux et lourds, et par conséquent, difficiles à manipuler et à transporter.

En outre, la fabrication de ces blocs requiert l'utilisation d'une grande quantité de matière.

Par ailleurs, la forme d'un bloc qui inclut l'agencement d'un canal interne et des encoches rend le procédé de moulage relativement complexe.

Finalement, le document DE4241278 divulgue un élément de dallage comprenant un plateau et des pieds apte à maintenir le plateau à distance d'une surface d'appui. Toutefois, cet élément de dallage n'est pas destiné à être installé en partie inférieure d'une installation de traitement d'effluents.

Un problème résolu par l'invention est de proposer un élément destiné à être disposé dans une installation de traitement d'effluents ou d'eaux usées, qui soit plus économique à fabriquer et plus facile à manipuler que les blocs de l'art antérieur.

Ce problème est résolu dans le cadre de la présente invention grâce à un élément de dallage destiné à être disposé en partie inférieure d'une installation de traitement d'effluents, l'élément présentant une face supérieure destinée à être en contact avec un massif de filtration et une face inférieure destinée à être en contact avec une surface d'appui, comprenant un plateau présentant une surface sensiblement plane s'étendant du côté de la face supérieure de l'élément, le plateau étant destiné à supporter le massif de filtration et présentant des orifices d'aération, une pluralité de pieds s'étendant en saillie par rapport au plateau, du côté de la face inférieure de l'élément, les pieds étant aptes à maintenir le plateau à distance de la surface d'appui pour ménager une couche d'air entre la surface d'appui et le massif de filtration, charactérisé en ce que les pieds sont creux et forment des cavités ouvertes vers la face supérieure de l'élément.

Avec un tel élément, l'aération du massif de traitement est permise grâce à l'espace ménagé entre le plateau et la surface d'appui. Cet espace contient de l'air qui est en communication avec le massif par l'intermédiaire des orifices d'aération du plateau.

Du fait que les pieds génèrent un encombrement réduit, la couche d'air présente en partie inférieure de l'installation occupe quasiment la totalité de la surface du massif. L'élément de dallage assure une aération améliorée du massif de filtration.

Les effluents qui percolent à travers le massif de traitement traversent l'élément de dallage par les orifices d'aération et s'écoulent sur la surface d'appui sur laquelle repose l'élément de dallage. L'élément de dallage ne nécessite donc pas l'agencement de canalisations spécifiques destinées à collecter les effluents traités.

L'élément pourra présenter les caractéristiques suivantes :
- chaque pied présente un orifice d'écoulement disposé au niveau d'une extrémité du pied destinée à être en contact avec la surface d'appui, l'orifice d'écoulement étant destiné à permettre l'évacuation des effluents s'écoulant à travers le pied,
- le plateau est formé d'une pluralité de portions élémentaires planes identiques, agencées selon une disposition en lignes et en colonnes,
- le plateau comprend une pluralité de portions élémentaires planes et comprend en outre des gorges s'étendant entre les portions planes,
- l'élément présente une alternance de portions élémentaires planes et de gorges,
- chaque gorge converge vers un pied,
- les gorges sont agencées sur le plateau selon un quadrillage, des pieds étant disposés au niveau de jonctions entre deux gorges,
- l'élément présente une forme générale carrée,
- l'élément est symétrique selon au moins deux axes,
- l'élément est formé d'une seule pièce par moulage d'un matériau polymère,
- l'élément est muni de moyens de connexion pour assembler l'élément à un autre élément de dallage.

L'invention se rapporte également à un dallage, constitué par l'association d'une pluralité d'éléments tels que définis précédemment.

Dans un tel dallage, les éléments peuvent être disposés côte à côte les uns des autres de manière à former une couverture continue de la surface d'appui.

L'invention se rapporte en outre à une installation de traitement d'effluents, comprenant un bassin étanche contenant des couches de granulats à travers lesquelles des effluents à traiter peuvent s'écouler verticalement, et des éléments de dallage tels que définis précédemment, les éléments de dallage étant disposés au fond du bassin, sous les couches de granulats.

L'installation pourra présenter les caractéristiques suivantes :
- les couches de granulats contiennent des couches superposées de sable et de graviers, avantageusement de granulométrie croissante dans le sens de l'écoulement des effluents,
- des granulats situés dans une partie inférieure du bassin sont calcaires,
- le bassin contient, dans sa partie supérieure, des plantes, de préférence des roseaux tels que des *Phragmitis australis,*
- le bassin est muni de cheminées verticales débouchant dans la couche d'air ménagée entre la surface d'appui et le massif de filtration par les éléments de dallage.

L'invention concerne enfin un procédé de traitement d'effluents dans une installation telle que définie précédemment. Le procédé comprend la percolation d'effluents à traiter à travers les couches de granulats et l'aération du massif de filtration à partir de la couche d'air ménagée entre la surface d'appui et le massif de filtration par les éléments de dallage.

D'autres caractéristiques et avantages ressortiront encore de la description qui suit, laquelle doit être lue en regard des dessins annexés, parmi lesquels :
- la figure 1 représente de manière schématique en vue de dessus un élément de dallage conforme à un mode de réalisation possible de l'invention,
- la figure 2 représente de manière schématique de côté l'élément de dallage de la figure 1,
- la figure 3 représente de manière schématique en vue de dessus le détail d'un motif de l'élément de dallage de la figure 1,
- la figure 4 représente de manière schématique le trajet de l'écoulement des effluents à travers l'élément de dallage,
- la figure 5 représente de manière schématique le remplissage des pieds creux de l'élément de dallage par des granulats du massif de filtration,
- la figure 6 représente de manière schématique le trajet de l'air à travers l'élément de dallage,
- la figure 7 représente des moyens de connexion destinés à assembler deux éléments de dallage entre eux,
- la figure 8 représente de manière schématique une installation de traitement d'effluents incluant un dallage formé d'éléments conformes à l'élément représenté sur les figures 1 à 7.

L'élément de dallage 100 selon la présente invention peut avantageusement être dénommé « Bloc Biostep ».

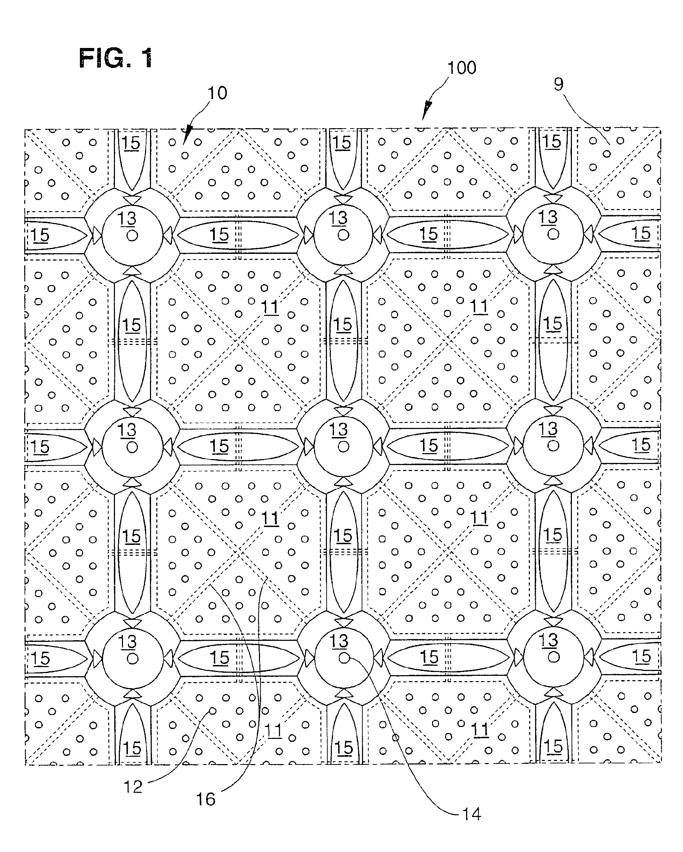

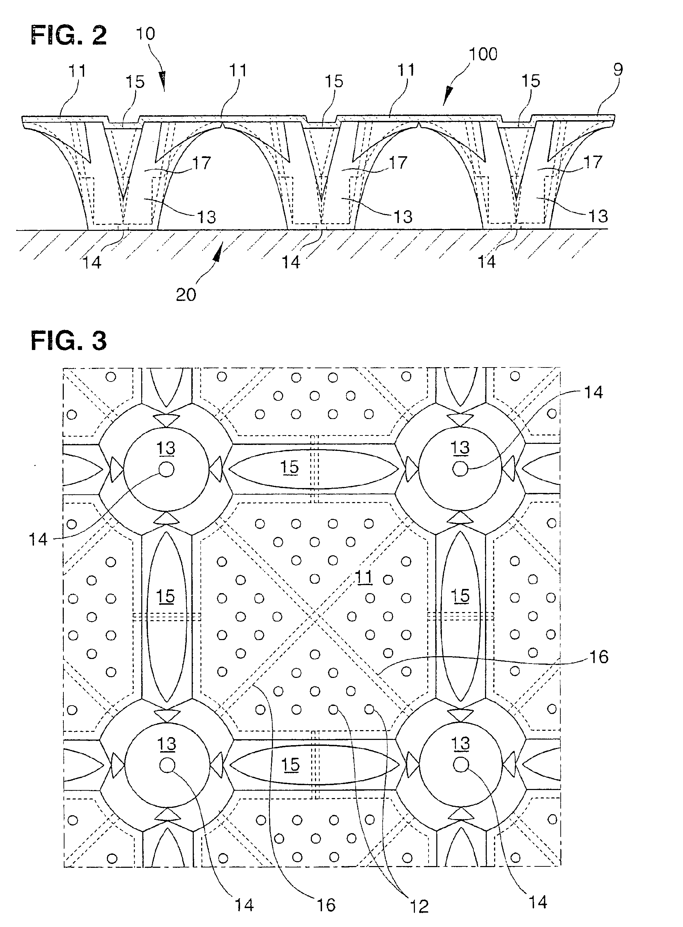

Comme on peut le voir sur les figures 1 et 2, l'élément de dallage 100 représenté présente une forme générale carrée plane. Il présente une face supérieure 10 destinée à être en contact avec un massif de filtration et une face inférieure 20 destinée à être disposée sur une surface d'appui de l'installation de traitement des effluents.

L'élément de dallage 100 est formé en une seule pièce par moulage d'un matériau polymère. Le moulage peut être réalisé entre deux matrices, sans nécessiter l'utilisation de noyaux ou d'éléments mobiles (du type tiroirs).

De manière générale, l'élément de dallage 100 comprend un plateau 9 présentant une surface sensiblement plane s'étendant du côté de la face supérieure 10 de l'élément 100 et une pluralité de pieds 13 s'étendant en saillie par rapport au plateau 9, du côté de la face inférieure 20 de l'élément 100.

Comme on peut le voir sur la figure 1, le plateau 9 est formé d'une pluralité de portions élémentaires planes 11 identiques et agencées sur l'élément 100 selon une disposition en lignes et en colonnes. Chaque portion élémentaire plane 11 présente une forme générale carrée et est munie d'orifices d'aération 12 aptes à laisser passer de l'air depuis la face inférieure 20 vers la face supérieure 10 de l'élément 100.

Les portions élémentaires planes 11 sont également munies de nervures 16 s'étendant selon leurs diagonales du côté de la face inférieure 20 de l'élément 100. Les nervures 16 permettent de renforcer la résistance des portions élémentaires planes 11. Le plateau 9 doit en effet être suffisamment résistant pour supporter la force exercée par des couches de granulats disposées sur la face supérieure 10 lorsque l'élément se trouve dans l'installation de traitement. Le plateau 9 doit également supporter le poids des opérateurs qui marchent sur l'élément 100 lors de la réalisation de l'installation de traitement.

Comme on peut le voir sur la figure 2, les pieds 13 sont aptes à maintenir le plateau 9 à distance de la surface d'appui 21 sur laquelle l'élément de dallage 100 est déposé.

Comme illustré sur les figures 1 et 2, des gorges 15 s'étendent entre les portions planes 11. Les gorges 15 sont agencées selon un quadrillage, chaque pied 13 étant disposé au niveau d'une jonction entre au moins deux portions en creux 15 de sorte que chaque gorge 15 converge vers un pied 13. Les gorges 15 permettent de drainer les effluents sur toute la face supérieure de l'élément de dallage 100.

L'élément de dallage 100 est ainsi formé par la répétition d'un motif en relief. Le motif est représenté plus précisément sur la figure 3.

Le plateau 9 de l'élément de dallage 100 forme une surface relativement uniforme sur laquelle peut reposer le massif de filtration de l'installation de traitement. Il s'ensuit qu'un tel élément permet un écoulement des effluents et une aération uniforme dans tout le massif. Il n'y a donc pas de discontinuités dans le processus de traitement des effluents.

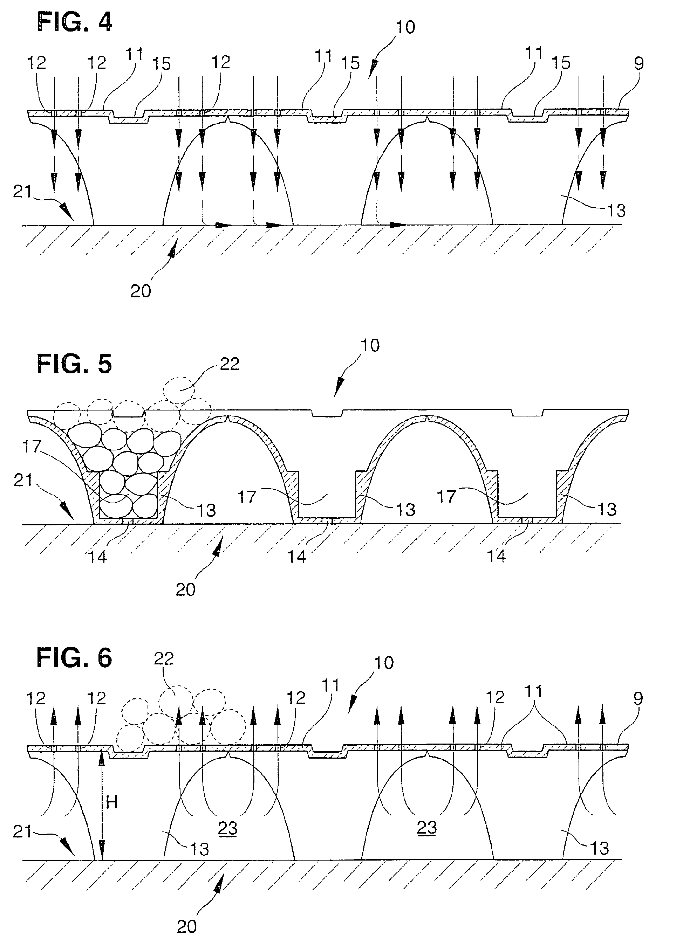

La figure 4 représente de manière schématique le trajet de l'écoulement des effluents à travers l'élément de dallage 100.

Comme on peut le voir sur la figure 4, les effluents reçus par la face supérieure 10 de l'élément de dallage 100 peuvent s'écouler à travers les orifices d'aération 12 ménagés dans les portions élémentaires planes 11 (comme indiqué par les flèches). Les effluents tombent alors directement sur la surface d'appui 21 sur laquelle repose l'élément de dallage 100 et peuvent ruisseler pour être évacués.

Par ailleurs, chaque pied 13 présente un orifice 14 d'écoulement disposé au niveau d'une extrémité du pied destinée à être en contact avec la surface d'appui 21. L'orifice 14 d'écoulement est également destiné à permettre l'évacuation des effluents s'écoulant à travers le pied.

Le diamètre des orifices d'aération 12 est inférieur à 10 mm, de préférence de l'ordre de 5 mm. Cette caractéristique permet de disposer sur l'élément de dallage une couche de granulats dont les dimensions sont variables en fonctions des caractéristiques requises de l'installation de traitement, les dimensions des granulats pouvant varier de 5 mm à 40 mm.

Grâce à la répartition quasiment uniforme des orifices d'aération 12 sur le plateau 9, l'élément de dallage 100 évite la formation d'une couche d'eau stagnante en contact avec le massif de filtration, en partie inférieure de l'installation de traitement.

Comme illustré sur la figure 5, les pieds 13 sont creux et forment des cavités 17 ouvertes vers la face supérieure 10 de l'élément 100. Ainsi, des éléments constitutifs du massif de traitement peuvent venir se déposer dans les cavités 17. Les cavités sont remplies par des granulats constitutifs de la couche la plus profonde de l'installation de traitement. Cette caractéristique permet un maintien stable de l'élément de dallage 100 contre la surface d'appui 21 et une consolidation de l'élément.

Le fait que les pieds 13 soient creux permet en outre d'empiler des éléments de dallage 100 les uns sur les autres lors de leur transport et de leur manutention. Un tel empilement présente un encombrement réduit car les pieds d'un élément peuvent venir s'insérer dans les cavités formées par les pieds d'un élément situé immédiatement en dessous.

La figure 6 représente de manière schématique le trajet de l'air à travers l'élément de dallage 100 (comme indiqué par les flèches). L'air remonte dans le massif de filtration par les orifices d'aération 12. Comme on peut le constater sur cette figure, l'aération du massif est permise grâce à l'espace 23 ménagé entre le plateau 9 et la surface d'appui 21. Cet espace 23 contient une couche d'air qui occupe quasiment la totalité de la surface de l'installation. L'élément de dallage 100 assure ainsi une aération améliorée du massif de filtration.

Une aération importante du massif de filtration est ainsi possible avec un élément de dallage 100 présentant un encombrement réduit. Typiquement, l'élément de dallage 100 présente une épaisseur H de l'ordre de 10 cm.

Par ailleurs, il est possible de constituer un dallage en associant une pluralité d'éléments 100. Les dimensions du dallage peuvent être adaptées au type d'installation de traitement en faisant varier le nombre d'éléments associés. Dans un tel dallage, les éléments sont disposés côte à côte les uns des autres de manière à former une couverture continue de la surface d'appui.

La forme générale carrée des éléments facilite leur association. En outre, sur chaque élément, les motifs en relief (comprenant les portions élémentaires planes, les pieds et les gorges), sont agencés de sorte que lorsque deux éléments sont disposés l'un à côté de l'autre pour former un dallage, les motifs présentent une continuité d'un élément à l'autre. Cette continuité est possible quelle que soit l'orientation des éléments l'un par rapport à l'autre. C'est pourquoi, le dallage obtenu est uniforme.

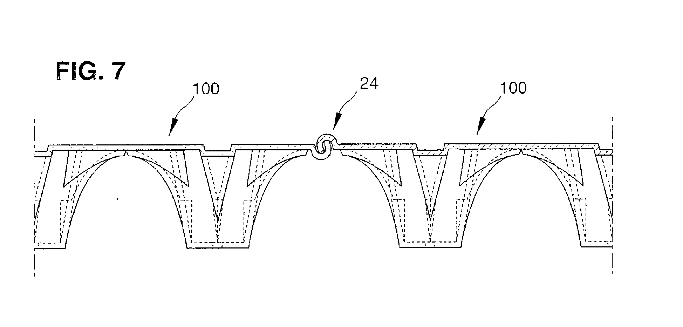

Le dallage obtenu par l'association d'éléments 100 constitue un ensemble stable par lui-même. Toutefois, des moyens de connexion peuvent être prévus pour connecter les éléments entre eux et assurer une meilleure cohésion du dallage. Ces moyens de connexion peuvent par exemple comprendre des moyens de clipsage 24 s'étendant au niveau des côtés des éléments 100 ou dans les angles de ceux-ci comme représenté sur la figure 7.

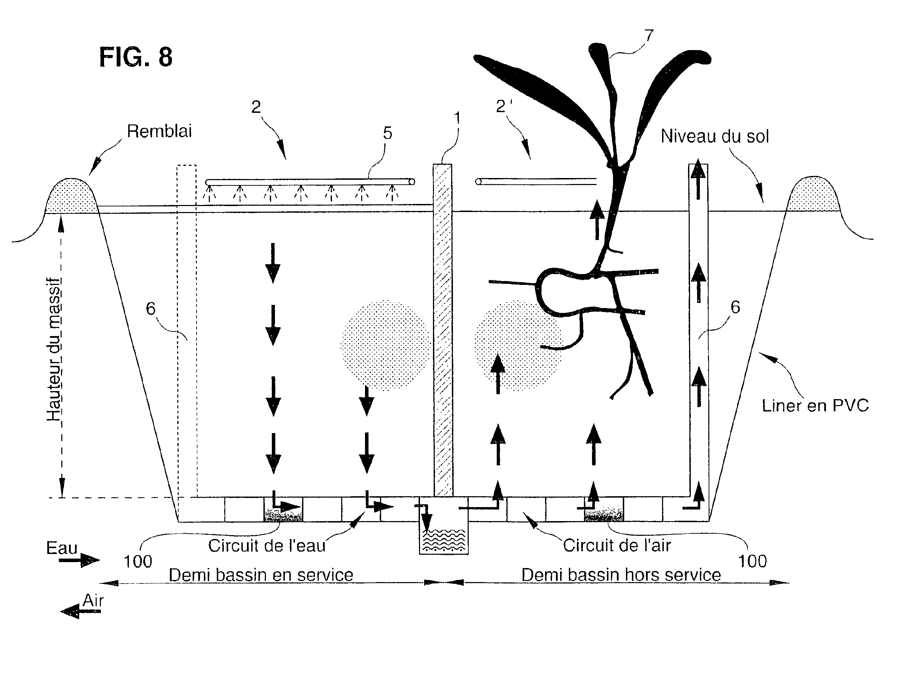

La figure 8 représente de manière schématique une installation de traitement d'effluents incluant un dallage formé d'éléments conformes à l'élément représenté sur les figures 1 à 7.

L'installation contient des couches de granulats 4 à travers lesquelles des effluents à traiter peuvent s'écouler verticalement, et des éléments de dallage 100, les éléments de dallage étant disposés au fond du bassin, sous les couches de granulats.

Comme illustré sur la figure 8, l'installation contient un bassin étanche, de préférence enterré, avantageusement recouvert d'un film en polychlorure de vinyle. Une paroi verticale 1 sépare le bassin en deux parties égales 2 et 2', qui peuvent être utilisées alternativement chaque semaine. Un canal collecteur central 3 permet d'évacuer les effluents épurés. L'ensemble du bassin est rempli de granulats 4 à travers lesquels les fluides à épurer percolent verticalement. Un dispositif d'aspersion 5 répand l'effluent sur toute la surface du bassin. Les éléments de dallage 100 tapissent le fond du bassin et permettent de recueillir l'eau ou les effluents qui percole(nt) verticalement et d'aérer en retour le massif de granulats situé au-dessus des éléments de dallage.

Dans un mode de réalisation particulier selon la présente invention, les couches de granulats 4 contiennent des couches superposées de sable et de graviers, avantageusement de granulométrie croissante dans le sens de l'écoulement des effluents, de la partie supérieure vers la partie inférieure du bassin. Les types de granulats, leur granulométrie, leur nature chimique, l'épaisseur des couches successives, et le gradient de leur taille sont choisis en fonction du type d'effluents à traiter.

Le sable mis en surface est composé de grains d'un diamètre compris de préférence entre 0 et 2 mm. Le granulat le plus en profondeur dans le bassin est avantageusement calcaire, afin d'alcaliniser le pH et de faciliter la nitrification.

Avantageusement selon la présente invention, le bassin contient, dans sa partie supérieure, notamment en surface du bassin, des plantes 7, de préférence des roseaux tels que des *Phragmitis australis.*

Les plantes permettent d'exercer un effet de déshydratation des boues par évapotranspiration, un effet de floculation des matières organiques dissoutes, un effet mécanique de décolmatage par les rhizomes, et/ou un effet d'oxygénation et de contrôle de microflore dans le massif.

De manière particulièrement avantageuse selon la présente invention, le bassin est muni de cheminées verticales 6 débouchant dans la couche d'air ménagée entre la surface d'appui et le massif de filtration par les éléments de dallage.

A cet effet, certains éléments sont adaptés pour recevoir les embouchures des cheminées d'aération. Ces éléments adaptés sont judicieusement disposés afin d'assurer une circulation homogène de l'air sous le massif.

Comme illustré sur la figure 8, l'air circule selon les flèches dirigées vers le haut dans le bassin 2'. Les cheminées latérales verticales 6 ménagées dans le granulat, permettent d'assurer cette circulation d'air. Au sein du bassin, circulent ainsi deux flux opposés d'air et d'eau.

La couche d'air continue créée par les éléments 100 sous le massif de filtration est constamment renouvelée grâce à la présence des cheminées d'aération. La circulation d'air sous toute la surface du bassin approvisionne en oxygène le massif de granulats et assure la vie des bactéries aérobie présentes dans le massif.

La présente invention a également pour objet un procédé de traitement d'eau usée ou d'effluents dans une installation selon la présente invention, comprenant la percolation des effluents à traiter à travers les couches de granulats et la circulation continue d'air en partie inférieure du bassin.

Le bassin, dont le fond est tapissé d'éléments de dallage, est alimenté par bâchée, d'environ 25 mm d'eau ou d'effluents en moyenne toutes les heures. Le fluide à épurer est répandu de préférence par un dispositif comportant une pompe à bâchée et un asperseur 5. La percolation des effluents à travers le massif est donc discontinue, ce qui laisse les pores libres pour le passage de l'air entre deux bâchées. Par ailleurs, la densité des pores est telle qu'un bullage est possible à travers les pores pendant le passage de la bâchée, et donne lieu à un système à contre-courant eau/air, particulièrement favorable au maintien d'une ambiance aérobie.

L'épuration est ainsi réalisée durant la percolation par des bactéries aérobies, dont la survie est assurée par la couche de granulats, la circulation d'air en partie basse, et l'action des roseaux lorsque la partie supérieure du bassin est plantée de roseaux.

Avantageusement selon la présente invention, le procédé comprend la mise hors d'eau alternative des deux demi-bassins 2 et 2'. Ceci permet alors d'assurer une hydratation moyenne du milieu, qui est favorable à l'activité bactérienne, et donc à la capacité épuratoire du milieu de percolation.

## Revendications

1. Elément (100) de dallage destiné à être disposé en partie inférieure d'une installation de traitement d'effluents, l'élément (100) présentant une face supérieure (10) destinée à être en contact avec un massif de filtration et une face inférieure (20) destinée à être en contact avec une surface d'appui (21), comprenant un plateau (9) présentant une surface sensiblement plane s'étendant du côté de la face supérieure de l'élément (100), le plateau (9) étant destiné à supporter le massif de filtration et présentant des orifices d'aération (12), et une pluralité de pieds (13) s'étendant en saillie par rapport au plateau (9), du côté de la face inférieure (20) de l'élément (100), les pieds (13) étant aptes à maintenir le plateau (9) à distance de la surface d'appui (21) pour ménager une couche d'air entre la surface d'appui (21) et le massif de filtration, **caractérisé en ce que** les pieds sont creux et forment des cavités ouvertes vers la face supérieure de l'élément.

2. Elément selon la revendication 1, dans lequel chaque pied (13) présente un orifice (14) d'écoulement disposé au niveau d'une extrémité du pied destinée à être en contact avec la surface d'appui (21), l'orifice (14) d'écoulement étant destiné à permettre l'évacuation des effluents s'écoulant à travers le pied.

3. Elément selon l'une des revendications qui précèdent, dans lequel le plateau (9) est formé d'une pluralité de portions élémentaires planes (11) identiques, agencées selon une disposition en lignes et en colonnes.

4. Elément selon l'une des revendications qui précèdent, dans lequel le plateau (9) comprend une pluralité de portions élémentaires planes (11) et comprend en outre des gorges (15) s'étendant entre les portions planes (11).

5. Elément selon la revendication 4, présentant une alternance de portions élémentaires planes (11) et de gorges (15).

6. Elément selon l'une des revendications 4 ou 5, dans lequel chaque gorge (15) converge vers un pied (13).

7. Elément selon l'une des revendications qui précèdent, dans lequel les gorges (15) sont agencées sur le plateau (9) selon un quadrillage, des pieds (13) étant disposés au niveau de jonctions entre deux gorges (15).

8. Elément selon l'une des revendications qui précèdent, l'élément présentant une forme générale carrée.

9. Elément selon l'une des revendications qui précèdent, l'élément étant symétrique selon au moins deux axes.

10. Elément selon l'une des revendications qui précèdent, formé d'une seule pièce par moulage d'un matériau polymère.

11. Elément selon l'une des revendications qui précèdent, muni de moyens de connexion (24) pour assembler l'élément (100) à un autre élément de dallage.

12. Dallage, constitué par l'association d'une pluralité d'éléments selon l'une des revendications qui précèdent.

13. Dallage selon la revendication 14, dans lequel les éléments sont disposés côte à côte les uns des autres de manière à former une couverture continue de la surface d'appui.

14. Installation de traitement d'effluents, comprenant un bassin étanche contenant des couches de granulats (4) à travers lesquelles des effluents à traiter peuvent s'écouler verticalement, et des éléments de dallage (100) selon l'une des revendications 1 à 11, les éléments de dallage (100) étant disposés au fond du bassin, sous les couches de granulats.

15. Installation selon la revendication 14, dans laquelle les couches de granulats (4) contiennent des couches superposées de sable et de graviers, avantageusement de granulométrie croissante dans le sens de l'écoulement des effluents.

16. Installation selon l'une des revendications 14 ou 15, dans laquelle des granulats situés dans une partie inférieure du bassin sont calcaires.

17. Installation selon l'une des revendications 14 à 16, dans laquelle le bassin contient, dans sa partie supérieure, des plantes (7) telles que des *Phragmitis australis*.

18. Installation selon l'une des revendications 14 à 17, dans laquelle le bassin est muni de cheminées verticales (6) débouchant dans la couche d'air ménagée entre la surface d'appui (21) et le massif de filtration par les éléments de dallage (100).

19. Procédé de traitement d'effluents dans une installation telle que définie à l'une quelconque des revendications 14 à 18, comprenant la percolation d'effluents à traiter à travers les couches de granulats et l'aération du massif de filtration à partir de la couche d'air ménagée entre la surface d'appui (21) et le massif de filtration par les éléments de dallage (100).

## Claims

1. Slab element (100) intended to be arranged in the lower part of a wastewater treatment plant, the element (100) having an upper face (10) intended to be in contact with a filter block, and a lower face (20) intended to be in contact with a bearing surface (21), comprising a plate (9) having a substantially planar surface extending on the side of the upper face of the element (100), the plate (9) being intended to support the filter block and having aeration orifices (12) and a plurality of legs (13) extending outwardly relative to the plate (9), on the side of the lower face (20) of the element (100), the legs (13) being capable of holding the plate (9) away from the bearing surface (21) to arrange a layer of air between the bearing surface (21) and the filter block, **characterized in that** the legs are hollow and form cavities opened towards the upper face of the element.

2. Element according to claim 1, wherein each leg (13) has a flow orifice (14) arranged at one end of the leg intended to be in contact with the bearing surface (21), the flow orifice (14) being intended to allow evacuation of wastewater flowing through the leg.

3. Element according to any of the preceding claims, wherein the plate (9) is formed of a plurality of identical planar elementary portions (11) arranged in rows and columns.

4. Element according to any of the preceding claims, wherein the plate (9) comprises a plurality of planar elementary portions (11) and also comprises grooves (15) extending between the planar portions (11).

5. Element according to claim 4 having alternate planar elementary portions (11) and grooves (15).

6. Element according to either of claims 4 or 5 wherein each groove (15) converges towards a leg (13).

7. Element according to any of the preceding claims wherein the grooves (15) are arranged on the plate (9) in a grid pattern, legs (13) being arranged at junctions between two grooves (15).

8. Element according to any of the preceding claims, the element having a general square shape.

9. Element according to any of the preceding claims, the element being symmetrical along at least two axes.

10. Element according to any of the preceding claims, formed of a single part by moulding a polymer material.

11. Element according to any of the preceding claims, provided with connection means (24) to assemble the element (100) to another slab element.

12. Slabbing consisting of the association of a plurality of elements according to any of the preceding claims.

13. Slabbing according to claim 12, wherein the elements are arranged side by side so as to form a continuous covering of the bearing surface.

14. Wastewater treatment plant comprising a sealed basin containing layers of granulates (4) through which the wastewater to be treated can flow vertically, and slab elements (100) according to any of claims 1 to 11, the slab elements (100) being arranged at the bottom of the basin under the layers of granulates.

15. Plant according to claim 14 wherein the layers of granulates (4) contain superimposed layers of sand and gravel, advantageously of increasing particle size in the direction of flow of the wastewater.

16. Plant according to either of claims 14 or 15 wherein the granulates located in a lower part of the basin are calcareous granulates.

17. Plant according to any of claims 14 to 16 wherein the basin, in its upper part, contains plants (7) such as *Phragmitis australis.*

18. Plant according to any of claims 14 to 17 wherein the basin is provided with vertical chimneys (6) opening into the layer of air arranged between the bearing surface (21) and the filter block via the slab elements (100).

19. Process to treat wastewater in a plant such as defined in any of claims 14 to 18, comprising the trickling of wastewater to be treated through layers of granulates and aeration of the filter block using the layer of air arranged between the bearing surface (21) and the filter block via the slab elements (100).

## Patentansprüche

1. Plattenbelagelement (100) zur Verwendung im unteren Bereich einer Anlage zur Abwasserbehandlung, wobei das Element (100), das eine mit einem Filtrationskörper in Kontakt zu bringende obere Fläche (10) und eine mit einer Trägerfläche (21) in Kontakt zu bringende untere Fläche (20) aufweist, aufweist:
eine Platte (9) mit einer im wesentlichen ebenen Oberfläche, die sich an der oberen Fläche des Elements (100) erstreckt, wobei die Platte (9) den Filtrationskörper tragen soll und Belüftungsöffnungen (12) aufweist, und
mehrere von der Platte (9) aus vorspringende Beine (13) an der unteren Fläche (20) des Elements (100), wobei die Beine (13) in der Lage sind, die Platte (9) in einem Abstand zur Trägerfläche (21) zu halten, um eine Luftschicht zwischen der Trägerfläche (21) und dem Filtrationskörper zu lassen,
**dadurch gekennzeichnet, daß** die Beine hohl sind und Hohlräume bilden, die zu der oberen Fläche des Elements hin offen sind.

2. Element nach Anspruch 1, in welchem jedes Bein (13) eine Abflußöffnung (14) aufweist, die an einem mit der Trägerfläche (21) in Kontakt zu bringenden Ende des Beins angeordnet ist, wobei die Abflußöffnung das Abfließen der über das Bein fließenden Abwässer erlauben soll.

3. Element nach einem der vorstehenden Ansprüche, in welchem die Platte (9) aus mehreren identischen ebenen elementaren Abschnitten (11) gebildet ist, die in einer Anordnung aus Reihen und Spalten angeordnet sind.

4. Element nach einem der vorstehenden Ansprüche, in welchem die Platte (9) mehrere ebene elementare Abschnitte (11) und außerdem Auskehlungen (15) aufweist, die sich zwischen den ebenen Abschnitten (11) erstrecken.

5. Element nach Anspruch 4, mit einer Wechselfolge aus ebenen elementaren Abschnitten (11) und Auskehlungen (15).

6. Element nach einem der Ansprüche 4 oder 5, in welchem sich jede Auskehlung (15) zu einem Bein (13) hin erstreckt.

7. Element nach einem der vorstehenden Ansprüche, in welchem die Auskehlungen (15) an der Platte (9) gemäß einem Gitternetz angeordnet sind, wobei Beine (13) an Verbindungsstellen zweier Auskehlungen (15) angeordnet sind.

8. Element nach einem der vorstehenden Ansprüche, wobei das Element eine allgemein quadratische Form hat.

9. Element nach einem der vorstehenden Ansprüche, wobei das Element mindestens bezüglich zweier Achsen symmetrisch ist.

10. Element nach einem der vorstehenden Ansprüche, gebildet aus einem einzigen Stück durch Formen eines Kunststoffmaterials.

11. Element nach einem der vorstehenden Ansprüche, versehen mit Verbindungseinrichtungen (24) zum Zusammenbauen des Elements (100) mit einem anderen Plattenbelagelement.

12. Plattenbelag, gebildet durch Zusammenbauen mehrerer Elemente nach einem der vorstehenden Ansprüche.

13. Plattenbelag nach Anspruch 14, in welchem die Elemente Seite an Seite nebeneinander angeordnet sind, so daß sie eine kontinuierliche Bedeckung der Trägerfläche bilden.

14. Anlage zur Abwasserbehandlung, mit einem dichten Becken, das Granulatschichten (4) enthält, über welche zu behandelnde Abwässer vertikal fließen können, und mit Plattenbelagelementen (100) nach einem der Ansprüche 1 bis 11, wobei die Plattenbelagelemente (100) am Boden des Beckens unterhalb der Granulatschichten angeordnet sind.

15. Anlage nach Anspruch 14, in welcher die Granulatschichten (4) übereinander geschichtete Schichten aus Sand und Kies vorzugsweise einer in Fließrichtung der Abwässer zunehmenden Kornklassierung enthalten.

16. Anlage nach einem der Ansprüche 14 oder 15, in welcher Granulate, die in einem unteren Teil des Beckens angeordnet sind, kalkhaltig sind.

17. Anlage nach einem der Ansprüche 14 bis 16, in welcher das Becken in seinem oberen Teil Pflanzen (7) enthält, beispielsweise *Phragmitis australis*.

18. Anlage nach einem der Ansprüche 14 bis 17, in welcher das Becken mit vertikalen Kaminen (6) versehen ist, die in die von den Plattenbelagelementen zwischen der Trägerfläche (21) und dem Filtrationskörper (100) geschaffene Luftschicht münden.

19. Verfahren zur Behandlung von Abwässern in einer Anlage, wie sie in einem der Ansprüche 14 bis 18 definiert ist, aufweisend die Filterung von zu behandelnden Abwässern über die Granulatschichten und die Belüftung des Filtrationskörpers ausgehend von der von den Plattenbelagelementen zwischen der Trägerfläche (21) und dem Filtrationskörper (100) geschaffenen Luftschicht.
